# EUROPÄISCHE PATENTANMELDUNG

(11) **EP 4 825 924 A1**
(43) Veröffentlichungstag der Anmeldung: **21.10.2026**
(21) Anmeldenummer: 25170766.7
(22) Anmeldetag: 15.04.2025
(51) Int. Cl.: C09D 5/00

(54) **HAFTVERMITTLER FÜR KANTENBÄNDER**

(71) Anmelder: KNEHO-LACKE GmbH, 32805 Horn-Bad Meinberg (DE)
(72) Erfinder: Hölscher, Reinhard, 32805 Horn-Bad Meinberg (DE); Lukanowski, Eugen, 32805 Horn-Bad Meinberg (DE); Dinkelborg, Bernd, 32805 Horn-Bad Meinberg (DE)
(74) Vertreter: dompatent

(57) **Zusammenfassung**

Die vorliegende Erfindung betrifft einen Haftvermittler für Kantenbänder sowie ein Verfahren zum Auftragen des erfindungsgemäßen Haftvermittlers auf ein Kantenband.

## Beschreibung

Die vorliegende Erfindung betrifft einen Haftvermittler für Kantenbänder sowie ein Verfahren zum Auftragen des erfindungsgemäßen Haftvermittlers auf ein Kantenband.

Kantenbänder, auch als Umleimer bezeichnet, dienen in der Möbelindustrie der Beschichtung der Schmal- und Stirnflächen von Werkstoffplatten wie beispielsweise Holzplatten oder Holzwerkstoffplatten, die häufig als Spanplatten, Faserplatten oder Verbundplatten ausgestaltet sind. Die Befestigung des Kantenbands erfolgt in der Regel mittels herkömmlichen Schmelzklebstoffen, das Kantenband kann aber auch bereits im Zuge der Fertigung mit einer Schmelzschicht oder Funktionalschicht versehen werden, die dann bei der Verarbeitung mit geeigneten Quellen aufgeschmolzen wird.

Ein entsprechendes Kantenband wird beispielsweise in der DE 20 2016 101 048U beschrieben, die ein Kantenband zur Beschichtung von Werkstücken, insbesondere zur Befestigung an einer gekrümmten Fläche des Werkstücks betrifft, wobei das Kantenband zumindest eine zumindest bereichsweise transparente Grundschicht aufweist, die zumindest bereichsweise aus einer elastomeren Polymermischung aus zumindest einem ersten Copolymer auf Acrylbasis und einem zweiten Copolymer auf Acrylbasis besteht.

EP 0 562 166 offenbart ein Kantenband (Umleimer) aus Kunststoff, das gegebenenfalls Füllstoffe und/oder Pigmente enthält, bedruckt und/oder geprägt ist, wobei das Kantenband aus einer mindestens zweischichtigen papierschichtfreien Kunststoffbahn oder einer mindestens zweischichtigen papierschichtfreien Endlosplatte von einer Materialdicke von 400 µm bis 4000 µm in Streifen von 12 mm bis 200 mm geschnitten ist, wobei das Kantenband mindestens zwei durch Coextrusion, Mehrfachextrusion oder Lamination hergestellte Schichten besitzt und mindestens eine Schicht oder Folie enthält, die a) mindestens eine Polyolefinschicht oder Polyolefinfolie oder polyolefinhaltige Schicht oder Folie ist und ein Propylenhomo- und/oder copolymerisat und/oder Ethylen hoher Dichte (HDPE) enthält oder daraus besteht und b) mindestens eine unmittelbar darunter oder über eine oder mehrere Zwischenschichten angeordnete nicht selbstklebende lösungsmittelfreie Haftfolie oder Haftvermittlerschicht besitzt, die eine Säuregruppen und/oder Estergruppen und/oder ein andere polare Gruppen enthaltendes Polymerisat, enthält.

In der Praxis weisen Kantenbänder häufig eine ungenügende Haftung auf, so dass es im Laufe der Zeit zu unerwünschten Ablösungen kommen kann. Um die Haftung zwischen Kantenband und Werkstück zu erhöhen, können Haftvermittler eingesetzt werden, die für einen stärkeren Verbund zwischen dem Kantenband und dem Werkstoff beziehungsweise zwischen den Klebstoffen sorgen sollen, die zur Befestigung eingesetzt werden. Zwar sind im Markt entsprechende Produkte bekannt, die in der Regel auf die Kantenbänder aufgetragen werden, diese weisen allerdings den Nachteil auf, dass sie meist auf Lösungsmittelbasis ausgestaltet sind, so dass eine energieintensive Trocknung notwendig ist, bevor das Kantenband verarbeitet werden kann und die Produktionsprozessstabilität bei der Applikation, aufgrund der Verdunstung von organischen Lösemitteln/Wasser, bei der Beschichtung unzureichend ist. Darüber hinaus sind lösungsmittelbasierte Systeme aus umwelttechnischen Gründen generell bedenklich und in der Regel mit regulatorischen Auflagen belegt.

Vor diesem Hintergrund liegt der vorliegenden Erfindung die Aufgabe zugrunde einen Haftvermittler zur Befestigung von Kantenbändern bereitzustellen, der die Nachteile des Stands der Technik überwindet und einen dauerhaften Verbund zwischen Kantenband und Werkstück gewährleistet und gleichzeitig eine schnelle Weiterverarbeitung des Kantenbands erlaubt.

Im Rahmen der vorliegenden Erfindung wurde überraschend gefunden, dass diese Aufgabe durch einen UV-härtbaren Haftvermittler gelöst wird, wie er in Anspruch 1 definiert ist. Weitere Aspekte und bevorzugte Ausführungsformen sind in den neben- und untergeordneten Ansprüchen dargelegt.

Daher ist ein erster Gegenstand der vorliegenden Erfindung ein Haftvermittler für Kantenbänder, der die folgenden Komponenten umfasst:
a) 50 bis 90 Gew.-% mindestens einer UV-härtbaren Komponente;
b) 10 bis 40 Gew.-% Füllstoffe; und
c) 0,1 bis 10 Gew.-% mindestens einen Photoinitiator.

Sofern nicht anders angegeben, beziehen sich die Angaben der Gew.-% jeweils auf das Gesamtgewicht des Haftvermittlers.

In einer bevorzugten Ausführungsform addieren sich die Komponenten des Haftvermittlers zu 100 Gew.-%.

Durch die UV-härtbare Komponente kann der Haftvermittler unmittelbar nach Auftrag ausgehärtet werden, so dass der Auftrag in einem vollautomatisierten Prozess erfolgen kann und ein energie- und zeitintensiver Trocknungsschritt entfällt. Gleichzeitig hat sich der erfindungsgemäße Haftvermittler mit den gängigen Schmelzklebstoffen als verträglich erwiesen, so dass ein stabiler Verbund zwischen Kantenband und Werkstück ausgebildet werden konnte.

In einer bevorzugten Ausführungsform beträgt der Anteil der mindestens einen UV-härtbaren Komponente in dem Haftvermittler 60 bis 80 Gew.-%, besonders bevorzugt 65 bis 75 Gew.-%, jeweils bezogen auf das Gesamtgewicht des Haftvermittlers. Bei Anteilen der mindestens einen UV-härtbaren Komponente in den angegebenen Bereichen konnte eine ausreichend schnelle Aushärtung des Haftvermittlers im automatischen Prozess erreicht werden, während gleichzeitig eine ausreichende Bearbeitungszeit erhalten blieb.

Der erfindungsgemäße Haftvermittler zeichnet sich dadurch aus, dass er unter Einfluss von UV-Strahlung aushärtet und das Kantenband unmittelbar weiterverarbeitet werden kann. Gleichzeitig unterstützt der erfindungsgemäße Haftvermittler die Ausbildung eines festen Verbunds zwischen Kantenband und Werkstück. Um diese Kombination an Eigenschaften zu erzielen, haben sich Ausführungsformen der vorliegenden Erfindung als bevorzugt erwiesen, in denen die mindestens eine UV-härtbare Komponente ausgewählt ist aus der Gruppe der Acrylate und Polyurethane. Besonders bevorzugt sind Polyester- und Amin-Acrylate und unter diesen insbesondere die cyclischen und aliphatischen. Daher ist eine Ausführungsform der vorliegenden Erfindung bevorzugt, in der die mindestens eine UV-härtbare Komponente ausgewählt ist aus der Gruppe, die aus cyclischen und aliphatischen Acrylaten, insbesondere cyclischen und/oder aliphatischen Polyester- und Amin-Acrylaten, besteht.

Ziel des erfindungsgemäßen Haftvermittlers ist unter anderem die Ausbildung einer strukturierten Oberfläche, um so die Haftung zwischen Kantenband und Werkstück weiterhin zu erhöhen. Im Rahmen der vorliegenden Erfindung wird dies dadurch erreicht, dass der erfindungsgemäße Haftvermittler Füllstoffe aufweist. In diesem Zusammenhang ist eine Ausführungsform bevorzugt, in der der Anteil an Füllstoffen im Haftvermittler 12 bis 35 Gew.-%, besonders bevorzugt 15 bis 25 Gew.-% beträgt, jeweils bezogen auf das Gesamtgewicht des Haftvermittlers. Durch den Anteil an Füllstoffen in den angegebenen Bereichen konnte eine Struktur der Oberfläche erreicht werden, die die Haftung unterstützt, ohne jedoch so rau zu sein, dass sie keine Haftungsgrundlage mehr bietet.

Um eine entsprechende Strukturierung der Oberfläche zu erzielen, handelt es sich bei den Füllstoffen vorzugsweise um amorphe Siliziumdioxide, insbesondere um pyrogene und gefällte Kieselsäuren sowie Mischungen hiervon. Im Rahmen der vorliegenden Erfindung können sowohl nachbehandelte als auch nicht nachbehandelte Kieselsäuren mit einer Partikelgröße von 2-15 µm eingesetzt werden. Die Partikelgröße kann beispielsweise mittels Laserbeugungsverfahren bestimmt werden.

Der erfindungsgemäße Haftvermittler weist weiterhin mindestens einen Photoinitiator auf, der unter Einwirkung von UV-Strahlung die Polymerisation der mindestens einen UV-härtbaren Komponente initiiert. In einer bevorzugten Ausführungsform beträgt die Menge an Photoinitiator im erfindungsgemäßen Haftvermittler 1 bis 10 Gew.-%, besonders bevorzugt 2 bis 7 Gew.-%, jeweils bezogen auf das Gesamtgewicht des Haftvermittlers. Die Menge an Photoinitiator kann dabei je nach Bedarf angepasst werden, sollte aber innerhalb der angegebenen Bereiche liegen, um ein zu schnelles beziehungsweise zu langsames Aushärten des Haftvermittlers zu vermeiden.

Der Photoinitiator kann auf die UV-härtbare Komponente des Haftvermittlers abgestimmt werden und ist vorzugsweise ausgewählt aus der Gruppe der α-Hydroxyketone und Thioxantonen. Es kann auch eine Mischung aus zwei oder mehr Photoinitiatoren eingesetzt werden.

Die mechanischen und rheologischen Eigenschaften des erfindungsgemäßen Haftvermittlers können nach Bedarf angepasst werden. Zu diesem Zweck kann der erfindungsgemäße Haftvermittler weiterhin bis zu 10 Gew.-%, vorzugsweise bis zu 5 Gew.-%, an Additiven aufweisen, jeweils bezogen auf das Gesamtgewicht des Haftvermittlers. Die Additive sind vorzugsweise ausgewählt aus der Gruppe der Bentonite, Silane, Siloxane und Acrylate sowie Mischungen hiervon. Als Silane werden solche mit reaktiven Glycidyl- und Methoxygruppen bevorzugt. Als weitere Additive, insbesondere zur zusätzlichen Verbesserung der Haftvermittlung, haben sich Polysiloxane und Polyethersiloxan-Copolymere als vorteilhaft erwiesen. Die als Additive zusätzlich im Haftvermittler vorhandenen Komponenten unterscheiden sich von denen, die als Komponenten a) bis c) im erfindungsgemäßen Haftvermittler vorliegen.

Herkömmliche Haftvermittler sind meist auf Wasser- oder Lösungsmittelbasis konzipiert, was den Nachteil mit sich bringt, dass zum einen energie- und zeitintensive Trocknung nötig ist, bevor das Kantenband weiterverarbeitet werden kann, und zum anderen das Lösungsmittel während des Auftrags verdampft, so dass keine stabile Auftragsmenge erreicht werden kann. Es wurde im Rahmen der vorliegenden Erfindung überraschend gefunden, dass der erfindungsgemäße Haftvermittler mit einer nur geringen Menge an Lösungsmittel, wie beispielsweise organische Lösungsmittel oder Wasser, auskommt und so eine garantierte Auftragsmenge und eine hohe Produktstabilität erreicht werden kann. Auch die Verunreinigungen, die normalweise beim Auftragen von herkömmlichen Haftvermittlern auftreten, lassen sich durch den Einsatz des erfindungsgemäßen Haftvermittlers vermeiden, so dass auch kein Reinigungsaufwand anfällt und der Haftvermittler in einem vollautomatisierten Prozess mit geringem Ausschuss aufgebracht werden kann. In einer bevorzugten Ausführungsform beträgt der Anteil an Lösungsmittel im erfindungsgemäßen Haftvermittler weniger als 5 Gew.-%, vorzugsweise weniger als 2 Gew.-%, jeweils bezogen auf das Gesamtgewicht des Haftvermittlers. Durch die geringe Menge an Lösungsmittel im erfindungsgemäßen Haftvermittler wird neben den prozesstechnischen Vorteilen ein wichtiger Beitrag zur Umweltverträglichkeit und Nachhaltigkeit des Produkts geleistet.

Der erfindungsgemäße Haftvermittler ist dafür konzipiert auf ein Kantenband aufgetragen zu werden. Daher ist ein weiterer Gegenstand der vorliegenden Erfindung ein Verfahren zum Auftragen des erfindungsgemäßen Haftvermittlers auf ein Kantenband, wobei der Haftvermittler mittels Walzverfahren auf ein Kantenband aufgetragen und anschließend mit UV-Strahlung bestrahlt wird. Vorteilhafterweise lassen sich der Auftrag und die Bestrahlung kombinieren. Vorzugsweise wird für die Bestrahlung eine UV-Quelle mit einem Emissionsspektrum von 200 bis 420 nm verwendet, wobei die Anzahl der UV-Quellen je nach Prozessführung angepasst werden kann.

Im Rahmen des erfindungsgemäßen Verfahrens hat sich überraschend gezeigt, dass durch die Verwendung des erfindungsgemäßen Haftvermittlers die Menge an benötigtem Haftvermittler reduziert werden kann, ohne dass dies zu einer Beeinträchtigung der Verbundfestigkeit zwischen Kantenband und Werkstück führen würde. Daher ist eine Ausführungsform bevorzugt, bei der der Haftvermittler in einer Menge von 6 bis 20 g/m², vorzugsweise 10 bis 15 g/m² aufgetragen wird.

Durch den erfindungsgemäßen Haftvermittler erfolgt ein schnelles Aushärten des aufgebrachten Haftvermittlers, was wiederum bedeutet, dass der Walzenvorschub erhöht werden kann, also mehr Produkt in der gleichen Zeit hergestellt werden kann. Somit ist eine Ausführungsform bevorzugt, in der der Vorschub der Walze 2 bis 40 m/min beträgt.

Im Rahmen des erfindungsgemäßen Verfahrens können die üblichen Kantenbänder eingesetzt werden. Vorzugsweise handelt es sich bei dem Material des Kantenbands um Kunststoff, insbesondere um einen, der ausgewählt ist aus der Gruppe bestehend aus Acrylnitril-Butadien-Styrol-Copolymer (ABS), Polypropylen (PP) und Polyvinlychlorid (PVC).

Der erfindungsgemäße Haftvermittler und das erfindungsgemäße Verfahren ermöglichen einen schnellen und effizienten Auftrag des Haftvermittlers auf ein Kantenband sowie die Ausbildung eines stabilen Verbunds zwischen Kantenband und Werkstück, wie anhand der folgenden Beispiele verdeutlicht, die keines Falls als Einschränkung des Erfindungsgedanken zu verstehen sind.

Tabelle 1 zeigt eine beispielhafte Zusammensetzung eines erfindungsgemäßen Haftvermittlers, der im Rahmen der folgenden Beispiele getestet wurde, wobei die Angaben jeweils in Gewichts-% sind.

**Tabelle 1:**

| **Rezeptbestandteil** | Anteil [%] |
|---|---|
| Acryliertes Oligoamin | 10,0 |
| Acryliertes Polyester | 5,0 |
| Cyclisches aliphatisches Monoacrylat I | 5,0 |
| Cyclisches aliphatisches Monoacrylat II | 51,0 |
| Antiabsetzmittel | 1,0 |
| Dispergiermittel | 4,0 |
| Entschäumer | 0,2 |
| Photoinitiator I | 0,5 |
| Photoinitiator II | 4,0 |
| Hydrophile pyrogene Kieselsäure | 3,0 |
| Unbehandelte gefällte Kieselsäure | 14,8 |
| Silan-funktioneller Haftvermittler | 1,0 |
| Netz- und Verlaufsmittel | 0,5 |
| Summe | 100,0 |

Zu Vergleichszwecken wurden die gleichen Versuche mit einem herkömmlichen Haftvermittler durchgeführt:
Vergleich: JOWAT Primer 406.09 Lösemittelbasiert

Der erfindungsgemäße Haftvermittler wurde auf ein Kantenband aufgebracht und unter den angegebenen Bedingungen ausgehärtet und das Kantenband dann auf dem Werkstück fixiert.
- Geschwindigkeit: 10-20 m/min
- UV-A: 170-300 mJ/cm² / 200-350 mW/cm²
- UV-B: 170-280 mJ/cm² / 215-360 mW/cm²
- UV-C: 70-115 mJ/cm² / 80-130 mW/cm²
- UV-V: 160-270 mJ/cm² / 195-325 mW/cm²

Der herkömmliche Haftvermittler wurde wie in der Gebrauchsvorschrift angegeben verarbeitet und aufgebracht. Die Trockenzeit des Haftvermittlers wurde abgewartet und das Kantenband auf dem Werkstück fixiert.

Das Kantenband wurde dann jeweils in einem Abziehversuch wieder entfernt und die zum Abziehen nötige Kraft bestimmt. Dabei sollte die benötigte Kraft bei mindestens 70 N liegen.

### Beispiel 1:

| | |
|---|---|
| Substrat: | Spanplatte 19 mm |
| Haftvermittler Vergleich 1: | 72 N |
| Erfindungsgemäßer Haftvermittler | 74 N |

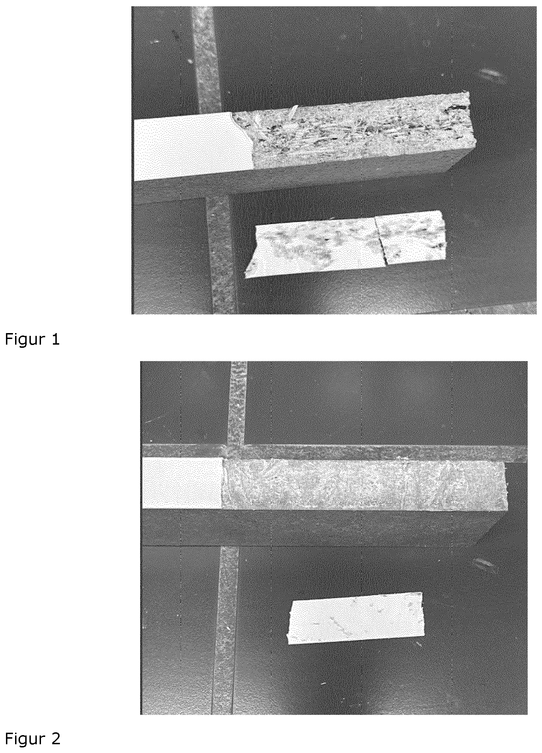

Figur 1 zeigt das Ergebnis des Abziehtests zu dem erfindungsgemäßen Haftvermittler. Der beobachtete Materialbruch zeigt, dass die innere Festigkeit im Kantenband geringer ist als der Verbund zwischen Haftvermittler und dem zum Aufbringen des Kantenbands verwendetem Klebstoff.

### Beispiel 2:

| | |
|---|---|
| Substrat: | Auf MDF19 mm |
| Haftvermittler Vergleich 1: | 71 N |
| Erfindungsgemäßer Haftvermittler: | 75 N |

Figur 2 zeigt das Ergebnis des Abziehversuchs zum erfindungsgemäßen Haftvermittler. Bei einer Abziehkraft von 75 N kam es zu einem Materialbruch im Kantenband, was zeigt, dass die innere Festigkeit im Kantenband geringer ist als der Verbund zwischen Kantenband und dem zum Aufbringen des Kantenbands verwendeten Klebstoffs.

Wie die Beispiele zeigen, erfüllt der erfindungsgemäße Haftvermittler alle Anforderungen, die an die Befestigung von Kantenbändern gestellt werden und übertrifft darüber hinaus die Ergebnisse, die mit herkömmlichen Haftvermittlern erzielt werden. Darüber hinaus bietet der erfindungsgemäße Haftvermittler den Vorteil, dass keine Trockenzeit abgewartet werden muss, sonders das Werkstück zeitnah weiterverarbeitet werden kann.

## Patentansprüche

1. Haftvermittler für Kantenbänder, **dadurch gekennzeichnet, dass** der Haftvermittler umfasst:
a) 50 bis 90 Gew.-% mindestens einer UV-härtbaren Komponente,
b) 10 bis 40 Gew.-% Füllstoffe,
c) 0,1 bis 10 Gew.-% mindestens eines Photoinitiators,
wobei sich die Gew.-% jeweils auf das Gesamtgewicht des Haftvermittlers beziehen.

2. Haftvermittler gemäß Anspruch 1, **dadurch gekennzeichnet, dass** der Anteil an der mindestens einen UV-härtbaren Komponente im Haftvermittler 60 bis 80 Gew.-%, vorzugsweise 65 bis 75 Gew.-% beträgt, jeweils bezogen auf das Gesamtgewicht des Haftvermittlers.

3. Haftvermittler gemäß wenigstens einem der vorangehenden Ansprüche, **dadurch gekennzeichnet, dass** die mindestens eine UV-härtbare Komponente ausgewählt ist aus der Gruppe der Acrylate und Polyurethane.

4. Haftvermittler gemäß Anspruch 3, **dadurch gekennzeichnet, dass** die mindestens eine UV-härtbare Komponente ausgewählt ist aus der Gruppe der Polyester- und Amin-Acrylate, vorzugsweise der cyclischen und aliphatischen Polyester- und Amin-Acrylate.

5. Haftvermittler gemäß wenigstens einem der vorangehenden Ansprüche, **dadurch gekennzeichnet, dass** der Anteil an Füllstoffen im Haftvermittler 12 bis 35 Gew.-%, vorzugsweise 15 bis 30 Gew.-%, insbesondere 15 bis 25 Gew.-% beträgt, jeweils bezogen auf das Gesamtgewicht des Haftvermittlers.

6. Haftvermittler gemäß wenigstens einem der vorangehenden Ansprüche, **dadurch gekennzeichnet, dass** es sich bei den Füllstoffen um solche handelt, die ausgewählt sind aus der Gruppe der amorphen Siliciumdioxide bestehend aus pyrogenen und gefällten Kieselsäuren, mit oder ohne Nachbehandlung, sowie Mischungen hiervon.

7. Haftvermittler gemäß wenigstens einem der vorangehenden Ansprüche, **dadurch gekennzeichnet, dass** der Haftvermittler 1 bis 10 Gew.-%, vorzugsweise 2 bis 7 Gew.-% des mindestens einen Photoinitiators umfasst, jeweils bezogen auf das Gesamtgewicht des Haftvermittlers.

8. Haftvermittler gemäß wenigstens einem der vorangehenden Ansprüche, **dadurch gekennzeichnet, dass** der Photoinitiator ausgewählt ist aus der Gruppe der α-Hydroxyketone und Thioxantonen.

9. Haftvermittler gemäß wenigstens einem der vorangehenden Ansprüche, **dadurch gekennzeichnet, dass** der Haftvermittler weiterhin bis zu 10 Gew.-%, vorzugsweise bis zum 5 Gew.-% an Additiven umfasst, jeweils bezogen auf das Gesamtgewicht des Haftvermittlers.

10. Haftvermittler gemäß Anspruch 9, **dadurch gekennzeichnet, dass** die Additive ausgewählt sind aus der Gruppe der Bentonite, Silane, Siloxane und Acrylate.

11. Verfahren zum Auftragen eines Haftvermittlers gemäß wenigstens einem der Ansprüche 1 bis 10, **dadurch gekennzeichnet, dass** der Haftvermittler mittels Walzverfahren auf ein Kantenband aufgetragen und anschließend mit UV-Strahlung bestrahlt wird.

12. Verfahren gemäß Anspruch 11, **dadurch gekennzeichnet, dass** der Haftvermittler in einer Menge von 6 bis 20 g/m², vorzugsweise 10 bis 15 g/m² aufgetragen wird.

13. Verfahren gemäß wenigstens einem der Ansprüche 11 oder 12, **dadurch gekennzeichnet, dass** der Vorschub der Walze 2 bis 40 m/min beträgt.

14. Verfahren gemäß wenigstens einem der Ansprüche 11 bis 13, **dadurch gekennzeichnet, dass** das Material des Kantenbands ausgewählt ist aus der Gruppe bestehend aus Acrylnitril-Butadien-Styrol-Copolymer (ABS), Polypropylen (PP) und Polyvinlychlorid (PVC).
